(19) Europäisches Patentamt
European Patent Office
Office européen des brevets

(11) **EP 2 560 802 B1**

(12) **EUROPÄISCHE PATENTSCHRIFT**

(45) Veröffentlichungstag und Bekanntmachung des Hinweises auf die Patenterteilung:
**30.07.2014 Patentblatt 2014/31**

(21) Anmeldenummer: **11722989.8**

(22) Anmeldetag: **20.04.2011**

(51) Int Cl.:
**B29C 45/42** (2006.01)   **B29C 45/76** (2006.01)

(86) Internationale Anmeldenummer:
**PCT/AT2011/000195**

(87) Internationale Veröffentlichungsnummer:
**WO 2011/130761 (27.10.2011 Gazette 2011/43)**

(54) **VERFAHREN ZUR ENTNAHME VON SPRITZGIEßARTIKELN UND EINRICHTUNG DAFÜR**

METHOD FOR REMOVING INJECTION-MOLDED ITEMS AND APPARATUS THEREFOR

PROCÉDÉ POUR RETIRER DES ARTICLES MOULÉS PAR INJECTION ET APPAREIL CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2010 AT 6792010**

(43) Veröffentlichungstag der Anmeldung:
**27.02.2013 Patentblatt 2013/09**

(73) Patentinhaber: **Wittmann Kunststoffgeräte GmbH 1220 Wien (AT)**

(72) Erfinder:
• **KALENDER, Tomas**
**A-2123 Wolfpassin (AT)**
• **RELLA, Johannes**
**A-2671 Payerbach (AT)**
• **ROYCE, Duane**
**06790 Torrington (US)**

(74) Vertreter: **Krause, Peter**
**Sagerbachgasse 7**
**2500 Baden (AT)**

(56) Entgegenhaltungen:
EP-A2- 1 057 607   DE-A1- 4 110 948
US-B1- 6 325 955

EP 2 560 802 B1

**Beschreibung**

Die Erfindung betrifft ein Verfahren zur Entnahme von Spritzgießartikeln aus einer Spritzgussmaschine mit einem Handhabungsautomaten, wobei sowohl die Spritzgussmaschine als auch der Handhabungsautomat jeweils mit einem eigenen, von je einer eigenen, separat programmierbaren Steuer- und Regeleinheit beaufschlagbaren Antrieb versehen und die Spritzgussmaschine mit mindestens einem Signalgeber zur Erkennung einer Stellung des Formwerkzeuges bestückt ist, wobei dieses Signal des Signalgebers an die, ein Rechenglied beinhaltende, Steuer- und Regeleinheit des Handhabungsautomaten angelegt wird.

Ein Verfahren, gemäß dem Oberbegriff des Anspruchs 1, der eingangs zitierten Art ist aus der EP 1057 607 A2 bekannt.

Es liegt in der Natur der Sache, dass bei der Herstellung von Spritzgießartikeln die Herstellzeit verkürzt werden soll. Ein Ansatz zur Zykluszeitreduktion war es, die Entnahmeachsen der Roboter mit massiveren Antrieben, Kraftübertragungen und Basiskonstruktionen auszustatten, um hohe Geschwindigkeiten bzw. Beschleunigungen zu erreichen. Bei einer Verfolgung dieses Weges hat sich gezeigt, dass diese schnellen Roboter bei relativ kurzen Achswegen ihre theoretisch errechneten Geschwindigkeiten gar nicht erreichen, weil sie nach kurzer Beschleunigungsphase schon wieder abbremsen müssen, um die Zielposition zu erreichen. Um diese Gegebenheiten zu kompensieren, müssen die Beschleunigungswerte sehr hoch angesetzt werden, was zu einer massiven und teuren Konstruktion führt.

Auch gibt es Faktoren abseits des Roboters die die unproduktive Zeit beeinflussen, wie die Geschwindigkeit des Auswerfers, die Öffnungszeit der Maschine, die Signalübertragung oder dergleichen.

So ist auch aus der DE 40 03 372 C1 ein Verfahren und eine Vorrichtung zum Steuern der Bewegungen einer Spritzgießform und eines Handlinggerätes bekannt. Um die Öffnungs- und Schließbewegung einer Spritzgießform und die Ein- und Ausfahrtsbewegung eines Greifwerkzeuges für die Abnahme des Formteiles in Abstimmung zueinander zu steuern, wird die Öffnungsbewegung der Form und/oder die Ausfahrbewegung des Greifwerkzeuges positions- und geschwindigkeitsabhängig erfasst. Nachteilig dabei ist der höhere Aufwand an Hardwareteilen.

Weiters ist aus der DE 41 10 948 C2 ein Verfahren zur Entnahme von Spritzgießartikeln aus einer Spritzgießmaschine mit einem Handhabungsautomaten bekannt, wobei sowohl die Spritzgießmaschine als auch der Handhabungsautomat jeweils mit einem eigenen, separat programmierbaren Steuer- und Regeleinheit beaufschlagbaren Antrieb versehen sind. Zumindest die Spritzgießmaschine ist mit mindestens einem Wegaufnahmesensor zur Kontrolle des Ablaufes bestückt. Auch in diesem Fall ist der hohe Bauteilaufwand nachteilig.

Ferner ist aus der WO 91/11313 ein Verfahren zum Entformen eines Formteiles sowie eine Vorrichtung zur Durchführung bekannt. Dabei wird der Formteil in einem ersten Teilhub mit niederer Geschwindigkeit in eine Zwischenstellung und anschließend in einem zweiten Teilhub mit höherer Geschwindigkeit in die Endstellung bewegt. Dazu weist die Spritzgießform druckmittelbetätigte Anschläge auf, die auf die Vorderseite einer Auswerferplatte wirken. Auch in dieser Bauart ist ein hoher Bauteilaufwand erforderlich.

Schließlich ist noch aus der DE 197 16 777 C2 ein Verfahren zum Betreiben eines Handhabungsgerätes an einer Kunststoffverarbeitungsmaschine bekannt. Nachteilig bei diesem Verfahren sind jedoch, Bewegungsunterbrechungen in der Bewegung des Roboters in Grenzfällen bei marginalem Verlassen der zulässigen Bereiche.

Die Aufgabe der Erfindung liegt darin, einerseits die oben aufgezeigten Nachteile zu vermeiden und andererseits die unproduktive Zeit im Zuge eines Herstellzyklus zu minimieren, insbesondere über die unterbrechungsfreie Dauer der Betriebszeit der Spritzgießmaschine.

Die Aufgabe wird durch die Erfindung gelöst.

Das erfindungsgemäße Verfahren ist dadurch gekennzeichnet, dass in Abhängigkeit der Flanke, vorzugsweise der negativen Flanke, dieses Signals der über die Steuer- und Regeleinheit vorgegebene Bewegungsablauf des Handhabungsautomaten nach jedem Entnahmezyklus neu berechnet wird und der Handhabungsautomat zum nächsten Entnahmezyklus über einen Zeitgeber, dem der neu berechnete Startzeitpunkt zugrunde liegt, aus seiner Startposition bewegt wird. Mit der Erfindung ist es erstmals möglich, alle zeitrelevanten Prozesse parallel und vorausschauend, unabhängig davon, ob sie handhabungsautomatenseitig oder spritzgussmaschinenseitig stattfinden, zu betrachten. Im Austausch mit der Steuer- und Regeleinheit der Spritzgussmaschine wird ein optimaler Entnahmeprozess nach jedem Herstellzyklus neu errechnet und der Start des Handhabungsautomaten neu festgelegt.

Beim Erststart der Spritzgussmaschine hat der Bediener bei der in der Steuer- und Regeleinheit hinterlegten Programmierung lediglich die Startposition des Handhabungsautomaten und die Entnahmeposition zur Übergabe des Spritzgießartikels festzulegen. Entsprechend dem heutigen Standard werden diese Positionen durch so genanntes "teachen" der Programmierung eingegeben. Die Berechnung der optimalen Bahnbewegung bzw. des Bewegungsablaufes des Handhabungsautomaten übernimmt die Steuer- und Regeleinheit. Ist die Spritzgussanlage, also die Spritzgussmaschine und der Handhabungsautomat, im Automatikzyklus gestartet, laufen mehrere Prozesse zur Optimierung der Entnahmezeit automatisch ab und werden permanent überwacht und erfindungsgemäß immer wieder neu angepasst.

Die Steuer- und Regeleinheit errechnet aus dem ersten und in Folge aus dem vorangegangenen Zyklus, wann sich das Formwerkzeug das nächste Mal öffnen wird und startet die Bewegung des Handhabungsautomaten, bevor das Signal für das offene Formwerkzeug eintrifft.

Ebenso funktioniert die Synchronisation mit den Auswerfern. Aufgrund der vorangegangenen Messung setzt die Steuer- und Regeleinheit vor Erreichen der Entnahmeposition das Auswerfersignal, um bei Erreichen der Entnahmeposition den Spritzgießartikel zu übernehmen, ohne auf die Auswerfer warten zu müssen. In äquivalenter Weise wird der optimale Zeitpunkt errechnet, um der Spritzgussmaschine das Signal für das Schließen des Formwerkzeuges zu geben, noch bevor der Handhabungsautomat vollständig aus dem Bereich des Formwerkzeuges ausgefahren ist.

Der überraschende Vorteil des erfindungsgemäßen Verfahrens ist somit darin zu sehen, dass die aus der Übertragung resultierenden Verzögerungszeiten aus dem Prozess eliminiert werden. Mit dem Einsatz des erfindungsgemäßen Verfahrens sind Einsparungen, vorzugsweise in der Größenordnung von 10 %, der Gesamtzeit möglich, die eine Produktivitätssteigerung im gleichen Ausmaß bedeutet.

Gemäß einer besonderen Ausgestaltung der Erfindung gibt der Signalgeber ein Signal zur Erkennung der Form-Offen-Stellung und gegebenenfalls ein weiterer Signalgeber ein Signal zur Erkennung der Form-Geschlossen-Stellung ab. Entsprechend der Bauart der Spritzgussmaschine ist diese mit mindestens einem Signalgeber bestückt. Dieser Signalgeber dient zur eindeutigen Erkennung der Form-Offen-Stellung und ist in praktisch allen Maschinentypen vorhanden. Darüber weisen viele Maschinentypen einen weiteren Signalgeber für die Form-Geschlossen-Stellung auf. Prinzipiell kann das Verfahren bei beiden Maschinentypen eingesetzt werden.

Nach einem besonderen Merkmal der Erfindung wird über ein Zeitmessglied der Steuer- und Regeleinheit des Handhabungsautomaten die Zeit, das ist die Zeit eines Zyklus zur Herstellung eines Spritzgießartikels abzüglich der Zeit des Formwerkzeuges in der Form-Offen-Stellung und gegebenenfalls diese Zeitdauer in der Steuer- und Regeleinheit des Handhabungsautomaten gespeichert. Insbesondere bei einem Maschinentyp mit nur einem Signalgeber, nämlich für das Signal der Form-Offen-Stellung, hat sich zur Berechnung des Bewegungsablaufes eines Herstellzyklus die Erfassung der Zeit des Formwerkzeuges in der Nicht-Offen-Stellung als am Zielführensten heraus kristallisiert. Diese Zeitspanne berücksichtigt praktisch alle variablen Größen im Ablauf. Wie später noch aufgezeigt wird, wären aber andere Zeiten die der Berechnung zugrunde gelegt werden, durchaus denkbar.

Gemäß einem weiteren besonderen Merkmal der Erfindung setzt in der Steuer- und Regeleinheit die Flanke, insbesondere die negative Flanke des Signals Form-Offen-Stellung den Zeitgeber für den Start des Handhabungsautomaten für den nächsten Entnahmezyklus auf null. Damit ist die Steuer- und Regeleinheit des Handhabungsautomaten und damit der Bewegungsablauf nur von dem einen Signal der Steuer- und Regeleinheit der Spritzgussmaschine abhängig. Es ist für den Steuer- und Regelvorgang der Spritzgussanlage kein zusätzlicher Bauteilaufwand erforderlich.

Da praktisch alle zum heutigen Stand der Technik zu zählenden Spritzgussmaschinen einen derartigen Signalgeber aufweisen, ist auch eine Nachrüstung jederzeit möglich.

Nach einer Weiterbildung der Erfindung wird in der Steuer- und Regeleinheit nach der Messung der Zeit, vorzugsweise durch die Flanke, insbesondere durch die positive Flanke, des Signals der Form-Offen-Stellung, die Berechnung für den Start des Handhabungsautomaten für den nächsten Entnahmezyklus durchgeführt und der Zeitgeber mit dieser Zeit programmiert wird. Dadurch ist die Synchronisation der Bewegungsabläufe von Spritzgussmaschine und Handhabungsautomaten durch das eine Signal, nämlich das der Form-Offen-Stellung, sichergestellt.

Bei einem Maschinentyp mit mindestens zwei Signalgebern, nämlich einer für die Form-Offen-Stellung und einem für die Form-Geschlossen-Stellung wird entsprechend einem Merkmal der Erfindung über ein Zeitmessglied der Steuer- und Regeleinheit des Handhabungsautomaten die Zeit, das ist die Zeit von der negativen Flanke des Signals der Form-Geschlossen-Stellung bis zur positiven Flanke des Signals der Form-Offen-Stellung gemessen und gegebenenfalls diese Zeitdauer in der Steuer- und Regeleinheit des Handhabungsautomaten gespeichert. Wie bereits weiter oben aufgezeigt, ist die Erfindung auch bei einem derartigen Maschinentyp einsetzbar.

Bezogen auf diesen Maschinentyp setzt in der Steuer- und Regeleinheit die Flanke, insbesondere die negative Flanke, des Signals der Form-Geschlossen-Stellung den Zeitgeber für den Start des Handhabungsautomaten für den nächsten Entnahmezyklus auf null. Damit ist die Steuer- und Regeleinheit des Handhabungsautomaten und damit der Bewegungsablauf von zwei Signalen der Spritzgussmaschine abhängig. Da viele Bauarten von Spritzgussmaschinen bereits mindestens zwei Signalgeber aufweisen, bedeutet dieser Verfahrensschritt keinen Aufwand an zusätzlichen Bauteilen.

Entsprechend dem grundlegenden Erfindungsgedanken wird gemäß einem Merkmal der Erfindung in der Steuer- und Regeleinheit nach der Messung der Zeit, vorzugsweise durch die Flanke, insbesondere durch die positive Flanke, des Signals der Form-Offen-Stellung, die Berechnung für den Start des Handhabungsautomaten für den nächsten Entnahmezyklus durchgeführt und der Zeitgeber mit dieser Zeit programmiert. Die Vorteile dieser Weiterbildung wurden bereits aufgezeigt.

Wenn sich durch die Berechnung ergibt, dass der Handhabungsautomat früher starten müsste als die Nullsetzungsflanke gegeben ist, wird die Zeitmessung auf die positive Flanke des Signals der Form-Geschlossen-Stellung bezogen. Nach einer Weiterbildung der Erfindung wird in diesem Fall über ein Zeitmessglied der Steuer- und Regeleinheit des Handhabungsautomaten die Zeit, das ist die Zeit von der positiven Flanke des Signals der Form-Geschlossen-Stellung bis zur positiven Flanke des Signals der Form-Offen-Stellung gemessen und gegebenenfalls diese Zeitdauer in der Steuer- und Regeleinheit des Handhabungsautomaten gespeichert. Dadurch wird kein Berechnungsvorgang übersprungen.

Nach einer entsprechenden Ausgestaltung der Erfindung setzt in der Steuer- und Regeleinheit die Flanke, insbesondere die positive Flanke, des Signals der Form-Geschlossen-Stellung den Zeitgeber für den Start des Handhabungsautomaten für den nächsten Entnahmezyklus auf null.

Gemäß der weiteren Ausgestaltung der Erfindung wird in der Steuer- und Regeleinheit nach der Messung der Zeit, vorzugsweise durch die Flanke, insbesondere durch die positive Flanke, des Signals der Form-Offen-Stellung, die Berechnung für den Start des Handhabungsautomaten für den nächsten Entnahmezyklus durchgeführt und der Zeitgeber mit dieser Zeit programmiert. Wie bereits erwähnt, wird dadurch eine kontinuierliche Berechnung jedes Zyklus gewährleistet.

Gemäß einem besonderen Merkmal der Erfindung wird das Signal der Form-Offen-Stellung während der Anfahrtsbewegung des Handhabungsautomaten in die Werkzeugform entsprechend dem Verzögerungsweg bis zum Eintritt des Handhabungsautomaten in den Bereich des Formwerkzeuges an die Steuer- und Regeleinheit des Handhabungsautomaten abgegeben. Damit wird gewährleistet, dass Fehlfunktionen im Bewegungsablauf des Handhabungsautomaten, wie beispielsweise das Einfahren bei noch nicht geöffnetem Formwerkzeug, absolut nicht auftreten können. Sollte das angesprochene Signal zum entsprechenden Zeitpunkt nicht gegeben sein, wird der Handhabungsautomat abgebremst und kommt vor dem Bereich des Formwerkzeuges zum Stillstand.

Nach einem weiteren Merkmal der Erfindung werden in die Neuberechnung der Startzeit des Handhabungsautomaten die konstruktiven Grundparameter, wie beispielsweise Beschleunigungs- und Bremsvermögen sowie Maximalgeschwindigkeit, des Handhabungsautomaten einbezogen. Durch die Einbeziehung dieser Faktoren ist das Verfahren individuell und für praktisch alle Spritzgussmaschinentypen anwendbar.

Gemäß einer besonderen Ausgestaltung der Erfindung werden in die Neuberechnung der Startzeit mindestens zwei verschiedene Beschleunigungen im Bewegungsablauf eines Herstellzyklus für den Handhabungsautomaten einbezogen. Diese Ausgestaltung bezieht sich darauf, dass Handhabungsautomaten von Programmierern korrekt und konkret auf schnelle Entnahme optimiert werden und die Maximalwerte von Beschleunigung und Geschwindigkeit vorgegeben werden. Dabei kann es zu Stillstandszeiten des Handhabungsautomaten vor jedem Entnahmezyklus kommen. Zur langfristigen Schonung des Handhabungsautomaten empfiehlt es sich daher, die Geschwindigkeit außerhalb des Formwerkzeuges so weit zu verringern, dass beim nächsten Zyklus die Stillstandszeit auf ein Minimum reduziert wird. Innerhalb des Bereiches des Formwerkzeuges wird mit der maximalen Geschwindigkeit verfahren.

Es ist auch Aufgabe der Erfindung eine Einrichtung zur Durchführung des oben beschriebenen Verfahrens zu schaffen.

Die erfindungsgemäße Einrichtung zur Durchführung des Verfahrens, wobei die Spritzgussmaschine mit mindestens einem Signalgeber zur Erkennung der Form-Offen-Stellung bestückt ist, wobei die Steuer- und Regeleinheit des Handhabungsautomaten mindestens ein Rechenglied, ein Zeitmessglied und einen Zeitgeber aufweist und der bzw. die Signalgeber der Spritzgussmaschine mit der Steuer- und Regeleinheit des Handhabungsautomaten verbunden sind, ist dadurch gekennzeichnet, dass die Einrichtung zur Durchführung des Verfahrens nach einem oder mehreren der Ansprüche 1 bis 14 ausgebildet ist. Wie bereits im Zuge der Ausführungen über das Verfahren dargelegt, sind die bereits aufgezeigten Vorteile mit der erfindungsgemäßen Einrichtung zu erzielen.

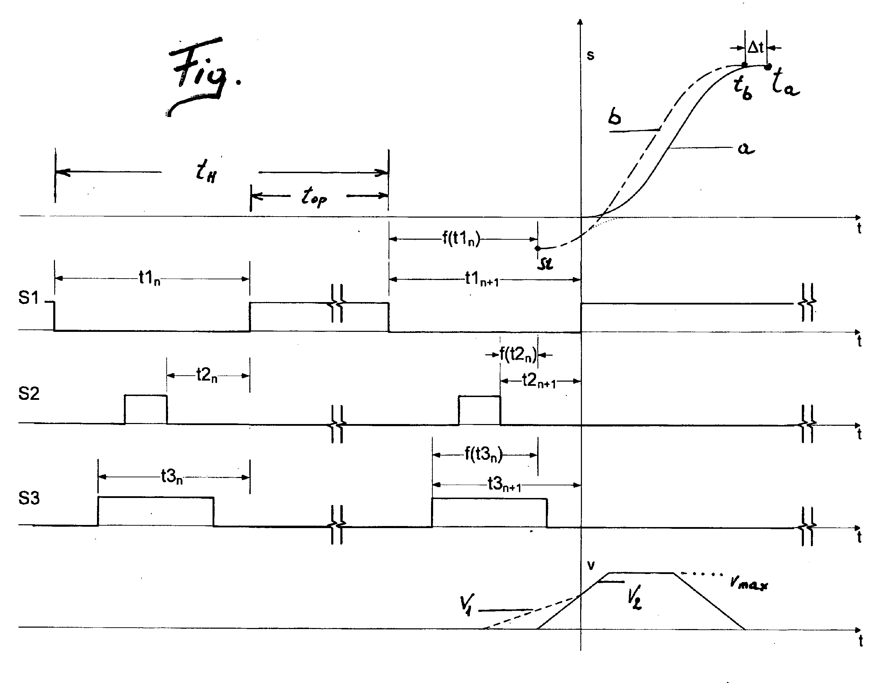

Die Erfindung wird an Hand eines Ausführungsbeispieles, das in der Zeichnung dargestellt ist, näher erläutert.

Die Fig. zeigt ein Diagramm des Weges des Handhabungsautomaten sowie der Signale über der Zeit.

Auf den waagrechten Achsen des Diagramms ist immer die Zeit dargestellt.

Zur Entnahme von Spritzgießartikeln aus einer Spritzgussmaschine mit einem Handhabungsautomaten, ist sowohl die Spritzgussmaschine als auch der Handhabungsautomat jeweils mit einem eigenen, von je einer eigenen, separat programmierbaren Steuer- und Regeleinheit beaufschlagbaren Antrieb versehen und die Spritzgussmaschine ist mit mindestens einem Signalgeber zur Erkennung einer Stellung des Formwerkzeuges bestückt.

Die Spritzgussmaschine ist also mit mindestens einem Signalgeber zur Erkennung der Stellung der Werkzeugform bestückt. Ferner weist die Steuer- und Regeleinheit des Handhabungsautomaten mindestens ein Rechenglied, ein Zeitmessglied und einen Zeitgeber auf. Die Signalgeber der Spritzgussmaschine sind mit der Steuer- und Regeleinheit des Handhabungsautomaten verbunden.

Ein herkömmlicher Handhabungsautomat startet seinen Bewegungsablauf a üblicherweise im Zeitpunkt der positiven Flanke eines Signals der Form-Offen-Stellung S1 und legt mit seiner von der Steuer- und Regeleinheit vorgegeben Beschleunigung bzw. Geschwindigkeit den Weg zur Entnahmeposition im Formwerkzeug zurück. Er erreicht die Entnahmeposition zum Zeitpunkt $t_a$.

Ziel des vorliegenden Verfahrens ist es, die Zeitdauer von der positiven Flanke des Signals der Form-Offen-Stellung S1 bis zum Erreichen der Entnahmeposition zu verkürzen, also den Zeitpunkt $t_a$ vorzuverlegen. Damit wird eine Einsparung der Gesamtzeit für einen Herstellzyklus möglich, wodurch eine Produktivitätssteigerung gegeben ist. Erreicht wird dieses Ziel indem der Handhabungsautomat bereits vor der positiven Flanke des Signals der Form-Offen-Stellung S1 startet. Um nun diesen vorverlegten Startzeitpunkt St rechnerisch festlegen zu können, wird einzig und allein für einen Maschinentyp mit nur einem Signalgeber, nämlich dem Signal der Form-Offen-Stellung S1, dieses Signal S1 in der Steuer- und Regeleinheit des Handhabungsautomaten verarbeitet.

Dieses Signal S1 des Signalgebers wird an die, ein Rechenglied beinhaltende, Steuer- und Regeleinheit des Handhabungsautomaten angelegt, wobei in Abhängigkeit der Flanke, vorzugsweise der negativen Flanke, dieses Signals S1 der über die Steuer- und Regeleinheit vorgegebene Bewegungsablauf b des Handhabungsautomaten nach jedem Entnahmezyklus neu berechnet wird. Der Handhabungsautomat wird zum nächsten Entnahmezyklus über einen Zeitgeber, dem der neu berechnete Startzeitpunkt St zugrunde liegt, aus seiner Startposition bewegt. Der Handhabungsautomat bewegt sich also gemäß seinem Bewegungsablauf b und erreicht seine Entnahmeposition zum Zeitpunkt $t_b$. Es ist also schaubildlich dargestellt, dass eine Zeiteinsparung $\Delta t$ gegeben ist.

Über ein Zeitmessglied der Steuer- und Regeleinheit des Handhabungsautomaten wird die Zeit $t1_n$, das ist die Zeit $t_H$ eines Zyklus zur Herstellung eines Spritzgießartikels abzüglich der Zeit $t_{Op}$ des Formwerkzeuges in der Form-Offen-Stellung gemessen. Diese Zeitdauer $t1_n$ wird in der Steuer- und Regeleinheit des Handhabungsautomaten gespeichert. Weiters setzt in der Steuer- und Regeleinheit die Flanke, insbesondere die negative Flanke des Signals Form-Offen-Stellung S1 den Zeitgeber für den Start des Handhabungsautomaten für den nächsten Entnahmezyklus auf null. In der Steuer- und Regeleinheit wird nach der Messung der Zeit $t1_n$, vorzugsweise durch die Flanke, insbesondere durch die positive Flanke, des Signals der Form-Offen-Stellung S1, die Berechnung $f(t1_n)$ für den Start des Handhabungsautomaten für den nächsten Entnahmezyklus durchgeführt und der Zeitgeber mit dieser Zeit programmiert.

Für den nächsten Herstellzyklus wird äquivalent verfahren. Es wird also die Zeitdauer $t1_{n+1}$ mit dem Zeitmessglied gemessen und entsprechend verarbeitet.

Es wurde bereits angesprochen, dass es auch Typen von Spritzgussmaschinen gibt, die zwei Signalgeber aufweisen. So weist dieser Maschinentyp einen Signalgeber mit einem Signal zur Erkennung der Form-Offen-Stellung S1 und einen weiteren Signalgeber mit einem Signal zur Erkennung der Form-Geschlossen-Stellung S2 bzw. S3 auf. In einem derartigen Fall hat sich bewährt, beide Signale S1 und S2 bzw. S1 und S3 der Steuer- und Regeleinheit des Handhabungsautomaten zuzuführen.

Es wird in diesem Fall über ein Zeitmessglied der Steuer- und Regeleinheit des Handhabungsautomaten die Zeit $t2_n$, das ist die Zeit von der negativen Flanke des Signals der Form-Geschlossen-Stellung S2 bis zur positiven Flanke des Signals der Form-Offen-Stellung S1, gemessen und diese Zeitdauer $t2_n$ in der Steuer- und Regeleinheit des Handhabungsautomaten gespeichert. In der Steuer- und Regeleinheit setzt die Flanke, insbesondere die negative Flanke, des Signals der Form-Geschlossen-Stellung S2 den Zeitgeber für den Start des Handhabungsautomaten für den nächsten Entnahmezyklus auf null. Weiters wird in der Steuer- und Regeleinheit nach der Messung der Zeit $t2_n$, vorzugsweise durch die Flanke, insbesondere durch die positive Flanke, des Signals der Form-Offen-Stellung S1, die Berechnung $f(t2_n)$ für den Start des Handhabungsautomaten für den nächsten Entnahmezyklus durchgeführt und der Zeitgeber mit dieser Zeit programmiert.

Es kann sich durch die Berechnung ergeben, dass der Handhabungsautomat früher starten müsste als die Nullsetzungsflanke gegeben ist. Für diesen Fall ist das Verfahren ebenfalls einsetzbar und die Zeitmessung wird auf die positive Flanke des Signals der Form-Geschlossen-Stellung S3 bezogen. Es wird somit die Zeit $t3_n$ gemessen. Über ein Zeitmessglied der Steuer- und Regeleinheit des Handhabungsautomaten wird die Zeit $t3_n$, das ist die Zeit von der positiven Flanke des Signals der Form-Geschlossen-Stellung S3 bis zur positiven Flanke des Signals der Form-Offen-Stellung S1 gemessen. Die nachfolgenden Verfahrensschritte entsprechen den oben aufgezeigten Schritten.

Um die Betriebssicherheit zu gewährleisten, ist nachstehende Weiterbildung des Verfahrens von außerordentlicher Wichtigkeit. Das Signal der Form-Offen-Stellung S1 muss während der Anfahrtsbewegung des Handhabungsautomaten in die Werkzeugform entsprechend dem Verzögerungsweg bis zum Eintritt des Handhabungsautomaten in den Bereich des Formwerkzeuges an die Steuer- und Regeleinheit des Handhabungsautomaten abgegeben werden. Schaubildlich verdeutlicht ist diese Maßnahme im untersten Diagramm in dem die Geschwindigkeit v des Handhabungsautomaten über der Zeit gezeigt ist. Sollte das Signal der Form-Offen-Stellung S1 nicht eingehen, muss der Handhabungsautomat gebremst werden und zwar so, dass er nicht in den Bereich des Formwerkzeuges eintritt. Eine Beschädigung der Form bzw. der Spritzgussmaschine wird dadurch vermieden.

Natürlich werden in die Neuberechnung der Startzeit des Handhabungsautomaten die konstruktiven Grundparameter, wie beispielsweise Beschleunigungs- und Bremsvermögen sowie Maximalgeschwindigkeit, des Handhabungsautomaten einbezogen.

In einer weiteren Ausgestaltung des Verfahrens werden in die Neuberechnung der Startzeit mindestens zwei verschiedene Beschleunigungen im Bewegungsablauf eines Herstellzyklus für den Handhabungsautomaten einbezogen. So wird beispielsweise die Beschleunigung für den Handhabungsautomaten unmittelbar nach seinem Start derart gewählt, dass dieser mit geringerer Geschwindigkeitszunahme $v_1$ bis zum Eintreffen des Signals S1 bewegt wird und erst ab diesem Zeitpunkt mit der Geschwindigkeitszunahme $v_2$ zu seiner Maximalgeschwindigkeit $v_{max}$ beschleunigt wird.

Äquivalent diesen Beschleunigungsvorgaben könnten auch Beschleunigungsvorgaben beim Rückweg des Handhabungsautomaten, also nach dem Verlassen der Entnahmeposition, erfolgen.

Auf die Berechnung wird nur Ansatzweise eingegangen. So ergibt sich, über die Gesamtperiode betrachtend, der Zeitpunkt des nächsten Starts des Handhabungsautomaten:

$$T\_start\_movement\_profile_{n+1} := T\_close_n + f(t1_n) = T\_close_n + t1_n - t\_prestart =$$

$$T\_close_n + t1_n \quad - \frac{a\_break\ vmax}{(a\_break + a\_pos)\ a\_pos}$$

wobei in der Formel bedeutet:

T_stan_movement_profite[n+1]...Zeitpunkt zu dem der Handhabungsautomat seinen Bewegungsablauf b das (n+1)-te (nächste) Mal starten wird

T_close[n].... Zeitpunkt des n-ten Beginns der Schließbewegung des Formwerkzeuges (negative Flanke des Signal Form-Offen-Stellung S1)

$T1_n$ ......Zeitspanne gemäß Fig.

t_prestart...Zeitspanne um die der Bewegungsablauf b beim vorliegenden Verfahren früher gestartet wird als bei herkömmlichem System

a_pos....Beschleunigungsvermögen (=konstruktive Maximalbeschleunigung) des bei der Entnahmebewegung beteiligten Handhabungsautomaten

a_break....Bremsvermögen (=konstruktive Maximalverzögerung) des bei der Entnahmebewegung beteiligten Handhabungsautomaten

vmax...konstruktive Maximalgeschwindigkeit des bei der Entnahmebewegung beteiligten Handhabungsautomaten

**Patentansprüche**

1. Verfahren zur Entnahme von Spritzgießartikeln aus einer Spritzgussmaschine mit einem Handhabungsautomaten, wobei sowohl die Spritzgussmaschine als auch der Handhabungsautomat jeweils mit einem eigenen, von je einer eigenen, separat programmierbaren Steuer- und Regeleinheit beaufschlagbaren Antrieb versehen und die Spritzgussmaschine mit mindestens einem Signalgeber zur Erkennung einer Stellung des Formwerkzeuges bestückt ist, wobei dieses Signal des Signalgebers an die, ein Rechenglied beinhaltende, Steuer- und Regeleinheit des Handhabungsautomaten angelegt wird, **dadurch gekennzeichnet, dass** in Abhängigkeit der Flanke, vorzugsweise der negativen Flanke, dieses Signals (S1, S2, S3) der über die Steuer- und Regeleinheit vorgegebene Bewegungsablauf (b) des Handhabungsautomaten nach jedem Entnahmezyklus neu berechnet wird und der Handhabungsautomat zum nächsten Entnahmezyklus über einen Zeitgeber, dem der neu berechnete Startzeitpunkt (St) zugrunde liegt, aus seiner Startposition bewegt wird.

2. Verfahren nach Anspruch 1, **dadurch gekennzeichnet, dass** der Signalgeber ein Signal zur Erkennung der Form-Offen-Stellung (S1) und gegebenenfalls ein weiterer Signalgeber ein Signal zur Erkennung der Form-Geschlossen-Stellung (S2, S3) abgibt.

3. Verfahren nach Anspruch 1 oder 2, **dadurch gekennzeichnet, dass** über ein Zeitmessglied der Steuer- und Regeleinheit des Handhabungsautomaten die Zeit $(t1_n)$, das ist die Zeit $(t_H)$ eines Zyklus zur Herstellung eines Spritzgießartikels abzüglich der Zeit $(t_{Op})$ des Formwerkzeuges in der Form-Offen-Stellung und gegebenenfalls diese Zeitdauer $(t1_n)$ in der Steuer- und Regeleinheit des Handhabungsautomaten gespeichert wird.

4. Verfahren nach einem oder mehreren der Ansprüche 1 bis 3, **dadurch gekennzeichnet, dass** in der Steuer- und Regeleinheit die Flanke, insbesondere die negative Flanke des Signals der Form-Offen-Stellung (S1) den Zeitgeber für den Start des Handhabungsautomaten für den nächsten Entnahmezyklus auf null setzt.

5. Verfahren nach einem oder mehreren der Ansprüche 1 bis 4, **dadurch gekennzeichnet, dass** in der Steuer- und Regeleinheit nach der Messung der Zeit $(t1_n)$, vorzugsweise durch die Flanke, insbesondere durch die positive Flanke, des Signals der Form-Offen-Stellung (S1), die Berechnung $f(t1_n)$ für den Start des Handhabungsautomaten für den nächsten Entnahmezyklus durchgeführt und der Zeitgeber mit dieser Zeit programmiert wird.

**6.** Verfahren nach Anspruch 2, **dadurch gekennzeichnet, dass** über ein Zeitmessglied der Steuer- und Regeleinheit des Handhabungsautomaten die Zeit ($t2_n$), das ist die Zeit von der negativen Flanke des Signals der Form-Geschlossen-Stellung (S2) bis zur positiven Flanke des Signals der Form-Offen-Stellung (S1), gemessen und gegebenenfalls diese Zeitdauer ($t2_n$) in der Steuer- und Regeleinheit des Handhabungsautomaten gespeichert wird.

**7.** Verfahren nach Anspruch 6, **dadurch gekennzeichnet, dass** in der Steuer- und Regeleinheit die Flanke, insbesondere die negative Flanke, des Signals der Form-Geschlossen-Stellung (S2) den Zeitgeber für den Start des Handhabungsautomaten für den nächsten Entnahmezyklus auf null setzt.

**8.** Verfahren nach Anspruch 6 oder 7, **dadurch gekennzeichnet, dass** in der Steuer- und Regeleinheit nach der Messung der Zeit ($t2_n$), vorzugsweise durch die Flanke, insbesondere durch die positive Flanke, des Signals der Form-Offen-Stellung (S1), die Berechnung $f(t2_n)$ für den Start des Handhabungsautomaten für den nächsten Entnahmezyklus durchgeführt und der Zeitgeber mit dieser Zeit programmiert wird.

**9.** Verfahren nach Anspruch 2, **dadurch gekennzeichnet, dass** über ein Zeitmessglied der Steuer- und Regeleinheit des Handhabungsautomaten die Zeit ($t3_n$), das ist die Zeit von der positiven Flanke des Signals der Form-Geschlossen-Stellung (S3) bis zur positiven Flanke des Signals der Form-Offen-Stellung (S1) gemessen wird und gegebenenfalls diese Zeitdauer ($t3_n$) in der Steuer- und Regeleinheit des Handhabungsautomaten gespeichert wird.

**10.** Verfahren nach Anspruch 9, **dadurch gekennzeichnet, dass** in der Steuer- und Regeleinheit die Flanke, insbesondere die positive Flanke, des Signals der Form-Geschlossen-Stellung (S3) den Zeitgeber für den Start des Handhabungsautomaten für den nächsten Entnahmezyklus auf null setzt.

**11.** Verfahren nach Anspruch 9 oder 10, **dadurch gekennzeichnet, dass** in der Steuer- und Regeleinheit nach der Messung der Zeit ($t3_n$), vorzugsweise durch die Flanke, insbesondere durch die positive Flanke, des Signals der Form-Offen-Stellung (S1), die Berechnung $f(t3_n)$ für den Start des Handhabungsautomaten für den nächsten Entnahmezyklus durchgeführt und der Zeitgeber mit dieser Zeit programmiert wird.

**12.** Verfahren nach einem oder mehreren der Ansprüche 1 bis 11, **dadurch gekennzeichnet, dass** das Signal der Form-Offen-Stellung (S1) während der Anfahrtsbewegung des Handhabungsautomaten in die Werkzeugform entsprechend dem Verzögerungsweg bis zum Eintritt des Handhabungsautomaten in den Bereich des Formwerkzeuges an die Steuer- und Regeleinheit des Handhabungsautomaten abgegeben wird.

**13.** Verfahren nach einem oder mehreren der Ansprüche 1 bis 12, **dadurch gekennzeichnet, dass** in die Neuberechnung der Startzeit (St) des Handhabungsautomaten die konstruktiven Grundparameter, wie beispielsweise Beschleunigungs- und Bremsvermögen sowie Maximalgeschwindigkeit, des Handhabungsautomaten einbezogen werden.

**14.** Verfahren nach einem oder mehreren der Ansprüche 1 bis 13, **dadurch gekennzeichnet, dass** in die Neuberechnung der Startzeit (St) mindestens zwei verschiedene Beschleunigungen im Bewegungsablauf eines Herstellzyklus für den Handhabungsautomaten einbezogen werden.

**15.** Einrichtung, wobei eine Spritzgussmaschine mit mindestens einem Signalgeber zur Erkennung der Stellung der Werkzeugform bestückt ist, wobei eine Steuer- und Regeleinheit des Handhabungsautomaten mindestens ein Rechenglied, ein Zeitmessglied und einen Zeitgeber aufweist und der bzw. die Signalgeber der Spritzgussmaschine mit der Steuer- und Regeleinheit des Handhabungsautomaten verbunden sind, **dadurch gekennzeichnet, dass** die Einrichtung zur Durchführung des Verfahrens nach einem oder mehreren der Ansprüche 1 bis 14 ausgebildet ist.

## Claims

**1.** Method for removing injection-molded items from an injection-molding machine by means of a robot, wherein the injection-molding machine and the robot are each provided with a separate drive, and each drive can be acted on by a separate open- and closed-loop control unit that can be programmed separately, and the injection-molding machine is equipped with at least one signaling device for detecting a position of the mold, wherein the signal of the signaling device is applied to the open- and closed-loop control unit of the robot, said open- and closed-loop control unit containing a computing element, **characterized in that** the motion sequence (b) of the robot specified by means of the open- and closed-loop control unit is recalculated after each removal cycle according to the edge, preferably the negative edge, of said signal (S1, S2, S3) and the robot is moved from the start position of the robot for the next removal cycle by means of a timer, which is based on the recalculated start time (st).

2. Method in accordance with Claim 1, **characterized in that** the signaling device gives a signal for detecting the mold-open position (S1) and, where applicable, another signaling device gives a signal for detecting the mold-closed position (S2, S3).

3. Method in accordance with Claim 1 or 2, **characterized in that** the time $(t1_n)$, that is the time $(t_H)$ of a cycle for production of an injection-molded item minus the time $(t_{Op})$ of the mold in the mold-open position, is measured by means of a time-measuring element of the open- and closed-loop control unit of the robot and this time period $(t1_n)$ is stored in the open- and closed-loop control unit of the robot where applicable.

4. Method in accordance with one or more of Claims 1 to 3, **characterized in that** the timer for the start of the robot for the next removal cycle is set to zero in the open- and closed-loop control unit by the edge, in particular the negative edge, of the signal of the mold-open position (S1).

5. Method in accordance with one or more of Claims 1 to 4, **characterized in that** the calculation $f(t1_n)$ for the start of the robot for the next removal cycle is made in the open- and closed-loop control unit after measurement of the time $(t1_n)$, preferably by the edge, in particular by the positive edge, of the signal of the mold-open position (S1), and the timer is programmed using this time.

6. Method in accordance with Claim 2, **characterized in that** the time $(t2_n)$, that is the time from the negative edge of the signal of the mold-closed position (S2) up to the positive edge of the signal of the mold-open position (S1), is measured by means of a time-measuring element of the open- and closed-loop control unit of the robot and this time period $(t2_n)$ is stored in the open- and closed-loop control unit of the robot where applicable.

7. Method in accordance with Claim 6, **characterized in that** the timer for the start of the robot for the next removal cycle is set to zero in the open- and closed-loop control unit by the edge, in particular the negative edge, of the signal of the mold-closed position (S2).

8. Method in accordance with Claim 6 or 7, **characterized in that** the calculation $f(t2_n)$ for the start of the robot for the next removal cycle is made in the open- and closed-loop control unit after measurement of the time $(t2_n)$, preferably by the edge, in particular by the positive edge, of the signal of the mold-open position (S1), and the timer is programmed using this time.

9. Method in accordance with Claim 2, **characterized in that** the time $(t3_n)$, that is the time from the positive edge of the signal of the mold-closed position (S3) up to the positive edge of the signal of the mold-open position (S1), is measured by means of a time-measuring element of the open- and closed-loop control unit of the robot and this time period $(t3_n)$ is stored in the open- and closed-loop control unit of the robot where applicable.

10. Method in accordance with Claim 9, **characterized in that** the timer for the start of the robot for the next removal cycle is set to zero in the open- and closed-loop control unit by the edge, in particular the positive edge, of the signal of the mold-closed position (S3).

11. Method in accordance with Claim 9 or 10, **characterized in that** the calculation $f(t3_n)$ for the start of the robot for the next removal cycle is made in the open- and closed-loop control unit after measurement of the time $(t3_n)$, preferably by the edge, in particular by the positive edge, of the signal of the mold-open position (S1), and the timer is programmed using this time.

12. Method in accordance with one or more of Claims 1 to 11, **characterized in that** the signal of the mold-open position (S1) is given to the open- and closed-loop control unit of the robot during the starting motion of the robot into the mold in accordance with the path of deceleration up to entry of the robot into the area of the mold.

13. Method in accordance with one or more of Claims 1 to 12, **characterized in that** the basic structural parameters of the robot, such as for example accelerating and stopping power as well as maximum speed, are included in the recalculation of the start time (st) of the robot.

14. Method in accordance with one or more of Claims 1 to 13, **characterized in that** at least two different accelerations in the motion sequence of a production cycle for the robot are included in the recalculation of the start time (st).

15. Device, wherein an injection-molding machine is equipped with at least one signaling device for detecting the position of the mold, wherein an open- and closed-loop control unit of the robot comprises at least a computing element, a time-measuring element and a timer and the signaling device or devices of the injection-molding machine are connected with the open- and closed-loop control unit of the robot, **characterized in that** the device for realization of the method is designed in accordance with one or more of Claims 1 to 14.

**Revendications**

1. Procédé d'extraction de produits moulés par injection sur une machine de moulage par injection à l'aide d'un automate de manutention, la machine de moulage ainsi que l'automate de manutention étant équipés chacun de leur propre dispositif d'entraînement commandé par une unité de commande et de réglage programmable séparément. La machine de moulage par injection est équipée d'au moins un émetteur de signal permettant d'identifier la position de l'outil de formage, ce signal étant appliqué à l'unité de commande et de réglage de l'automate de manutention, ladite unité de commande et de réglage comprenant un circuit de calcul. La séquence de mouvements (b) de l'automate de manutention spécifiée par l'unité de commande et de réglage est recalculée après chaque cycle d'extraction en fonction du flanc du signal (S1, S2, S3), de préférence le flanc descendant. L'automate de manutention est alors déplacé de la position de départ vers le prochain cycle d'extraction à l'aide d'un temporisateur qui est à la base du temps de départ recalculé (St).

2. Procédé selon la revendication 1, **caractérisé en ce que** l'émetteur de signal transmet un signal permettant d'identifier la position de moule ouvert (S1) et éventuellement un autre émetteur de signal transmet un signal permettant d'identifier la position de moule fermé (S2, S3).

3. Procédé selon les revendications 1 ou 2, **caractérisé en ce que** le temps ($t1_n$) est enregistré dans l'unité de commande et de réglage de l'automate de manutention par l'intermédiaire d'un instrument de mesure du temps de l'unité de commande et de réglage de l'automate de manutention, le temps ($t1_n$) étant défini comme la différence entre le temps ($t_H$) d'un cycle de fabrication d'un produit moulé et le temps ($t_{Op}$) pendant lequel l'outil de formage est en position de moule ouvert.

4. Procédé selon une ou plusieurs des revendications 1 à 3, **caractérisé en ce que** le flanc du signal de la position de moule ouvert (S1), et en particulier le flanc descendant, remet à zéro le temporisateur démarrant l'automate de manutention pour le prochain cycle d'extraction dans l'unité de commande et de réglage.

5. Procédé selon une ou plusieurs des revendications 1 à 4, **caractérisé en ce qu'**après avoir réalisé la mesure du temps ($t1_n$) de préférence via le flanc du signal de la position de moule ouvert (S1), et en particulier le flanc montant, le calcul f($t1_n$) pour le démarrage de l'automate de manutention pour le prochain cycle d'extraction est effectué, et le temporisateur est programmé à l'aide de ce temps.

6. Procédé selon la revendication 2, **caractérisé en ce que** le temps ($t2_n$) est mesuré et enregistré dans l'unité de commande et de réglage de l'automate de manutention par l'intermédiaire d'un instrument de mesure du temps de l'unité de commande et de réglage de l'automate de manutention, le temps ($t2_n$) étant défini comme le temps écoulé entre le flanc descendant du signal de la position de moule fermé (S2) et le flanc montant du signal de la position de moule ouvert (S1).

7. Procédé selon la revendication 6, **caractérisé en ce que** le flanc du signal de la position de moule fermé (S2), et en particulier le flanc descendant, remet à zéro le temporisateur démarrant l'automate de manutention pour le prochain cycle d'extraction dans l'unité de commande et de réglage.

8. Procédé selon les revendications 6 ou 7, **caractérisé en ce qu'**après avoir réalisé la mesure du temps ($t2_n$) de préférence via le flanc du signal de la position de moule ouvert (S1), et en particulier le flanc montant, le calcul f($t2_n$) pour le démarrage de l'automate de manutention pour le prochain cycle d'extraction est effectué, et le temporisateur est programmé à l'aide de ce temps.

9. Procédé selon la revendication 2, **caractérisé en ce que** le temps ($t3_n$) est mesuré et enregistré dans l'unité de commande et de réglage de l'automate de manutention par l'intermédiaire d'un instrument de mesure du temps de l'unité de commande et de réglage de l'automate de manutention, le temps ($t3_n$) étant défini comme le temps écoulé entre le flanc montant du signal de la position de moule fermé (S3) et le flanc montant du signal de la position de moule ouvert (S1).

10. Procédé selon la revendication 9, **caractérisé en ce que** le flanc du signal de la position de moule fermé (S3), et en particulier le flanc montant, remet à zéro le temporisateur démarrant l'automate de manutention pour le prochain cycle d'extraction dans l'unité de commande et de réglage.

11. Procédé selon les revendications 9 ou 10, **caractérisé en ce qu'**après avoir réalisée la mesure du temps ($t3_n$) de préférence via le flanc du signal de la position de moule ouvert (S1), et en particulier le flanc montant, le calcul $f(t3_n)$ pour le démarrage de l'automate de manutention pour le prochain cycle d'extraction est effectué, et le temporisateur est programmé à l'aide de ce temps.

12. Procédé selon une ou plusieurs des revendications 1 à 11, **caractérisé en ce que** le signal de moule ouvert (S1) est transmis à l'unité de commande et de réglage de l'automate de manutention pendant le mouvement d'approche de l'automate de manutention dans l'outil de formage conformément à la distance de décélération jusqu'à l'entrée de l'automate de manutention dans la zone de l'outil de formage.

13. Procédé selon une ou plusieurs des revendications 1 à 12, **caractérisé en ce que** les paramètres constructifs de l'automate de manutention tels que l'accélération, la capacité de freinage ainsi que la vitesse maximale sont inclus dans le recalcul du temps de départ (St) de l'automate de manutention.

14. Procédé selon une ou plusieurs des revendications 1 à 13, **caractérisé en ce qu'**au moins deux accélérations différentes dans la séquence de mouvements d'un cycle de production pour l'automate de manutention sont incluses dans le recalcul du temps de départ (St).

15. Installation, une machine de moulage par injection étant équipée d'au moins un émetteur de signal permettant d'identifier la position de l'outil de formage, une unité de commande et de réglage de l'automate de manutention comportant au moins un circuit de calcul, un instrument de mesure du temps ainsi qu'un temporisateur, l'émetteur de signal de la machine de moulage par injection étant reliée à l'unité de commande et de réglage de l'automate de manutention, ladite installation étant **caractérisé en ce que** la mise en oeuvre du procédé est réalisée selon une ou plusieurs des revendications 1 à 14.

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1057607 A2
- DE 4003372 C1
- DE 4110948 C2

- WO 9111313 A
- DE 19716777 C2